# EUROPEAN PATENT SPECIFICATION

(11) **EP 3 355 557 B1**
(45) Date of publication and mention of the grant of the patent: **02.09.2020**
(21) Application number: 17209249.6
(22) Date of filing: 29.07.2009
(51) Int. Cl.: H04M 1/2745, G01C 21/36

(54) **MAKING ADDRESS BOOK A SOURCE OF LATITUDE AND LONGITUDE COORDINATES**
HERSTELLUNG EINES ADRESSBUCHS ALS QUELLE VON LÄNGEN- UND BREITENKOORDINATEN
UTILISATION D'UN CARNET D'ADRESSES COMME SOURCE DE COORDONNÉES DE LATITUDE ET DE LONGITUDE

(43) Date of publication of application: 01.08.2018
(62) Divisional of application: 09166725.3
(73) Proprietor: BlackBerry Limited, Waterloo, ON N2K 0A7 (CA)
(72) Inventor: NGO, Ngoc Bich, Nepean, Ontario K2G 5Y8 (CA); YACH, David, Paul, Waterloo, Ontario N2K 2W2 (CA)
(74) Representative: MERH-IP Matias Erny Reichl Hoffmann Patentanwälte PartG mbB

(56) References cited:
- EP-A- 1 840 523
- WO-A2-2008/002391
- US-A1- 2005 114 021
- US-A1- 2008 280 600

## Description

### Technical Field

This application is related to a method and device for automatically determining latitude and longitude coordinates for a geographic address input into a mobile device for storing in a contact record of an address book.

### Background

Some mobile devices have map applications loaded on the devices. Map applications can be used to show a specific location on a map or to show the location of the mobile device, if the device is equipped with a position broadcast system, such as GPS (Global Positioning System). In some systems, map applications can be used to show the locations of one or more other mobile devices that are members of a group that participate in location sharing. Some map applications allow the user to designate one or more locations as Points of Interest (POIs). For some map applications, these POIs are considered "favourites" which could be shown on the map each time the respective area is displayed or shared with other map users or simply stored for sub-sequent display on-demand without having to go through the geo-coding process again.

Likewise, many mobile devices also have address book applications stored thereon. Addresses and contact information are represented in the address book application as address cards. Users can open a new address card for a new contact or update existing address cards with new or changed information. In some applications, address books on mobile devices can be updated by importing data from an external source such as an address book on a personal computer, a database on a personal computer or server, a business card scanner, or an SD (Secure Digital) card.

In some mobile devices, a user can chose to view an address from the address book on a map. When a user selects an option to view an address on a map, the map application sends a request to a server, such as a location server, to obtain geo-coded information for the respective address. The geo-coded information comprises the latitude and longitude of the address which is used by the map application to show the address on a map.

Patent document US 2005/0114021 A1 discloses the integration of a personal digital assistant (PDA) address book function with an electronic map and GPS capabilities whereby a manual user request of the PDA may allow the association of a global positioning system (GPS) waypoint with an address book entry.

Patent document US 2008/280600 A1 discloses a display for a mobile device that can display the current geographic location of a contact associated with an address book.

Patent document EP 1840523 A1 discloses methods and an apparatus for associating mapping functionality with information in contact lists of mobile communication devices.

Patent document WO 2008/002391 A2 relates to a method and apparatus that improves the positional accuracy of a geocoded point in comparison to traditional geocoding methods and geo-coders, wherein ground truth data is utilized in conjunction with address range information for a given segment to achieve positional accuracy.

### Summary

The scope of the invention is defined by the annexed claims.

In one aspect, there is provided a method according to the wording of claim 1. In one additional aspect a device is provided according to the wording of claim 13.

The dependent claims define further advantageous implementations.

### Brief Description of the Drawings

Examples of embodiments will now be described in greater detail with reference to the accompanying drawings, in which:
Figure 1 is a flowchart of a method according to an aspect;
Figure 2 is a flowchart of a method according to an aspect;
Figure 3 is a flowchart of a method according to an aspect;
Figure 4 is a block diagram of a mobile device according to one aspect;
Figure 5 is a block diagram of a system according to one aspect; and
Figure 6 is a block diagram of a mobile device on which the methods described herein may be executed.

### Detailed Description

In some mobile devices, a map client or application can be invoked from a contact record in an address book application. In some situations, if a geographic address (e.g. work or home civic address) has been entered into the address book, a two-step approach is implemented:
1) upon selection of "view work map" or "view home map" or any other option to view a location of a geographic address on a map, a first request is sent to a location server to geo-code the geographic address into latitude/longitude coordinates; and
2) based on the latitude/longitude coordinates obtained from the location server, a request for map data is then sent to the map server to obtain map data for that location.

In the above approach, the geographic address must be geo-coded (for example, converted to latitude and longitude coordinates) every time the user wants to see the physical location of the address displayed overtop of a map. Considering that maps of contacts are likely to be viewed frequently, this makes the approach inefficient and time consuming.

Geo-coding may be a process of obtaining or finding associated geographic information based on other geographic data, such as a street address, place name or postal code. Associated geographic information may be, but is not limited to, latitude and longitude coordinates.

Another approach is to geo-code contact addresses upon entry into the mobile device to avoid geo-coding in real time and repeated geo-coding requests to the server, such as every time "view work map" or "view home map" is invoked. This approach results in less geo-coding requests and, therefore, less use of network resources. Another result is better performance when viewing locations of addresses from the address book. For example, because the address is already geo-coded, when the user chooses to view the location on a map, the map application simply accesses the geo-coded information from an internal memory on the mobile device, which takes less time than making a geo-coding request to a location or geo-code server.

The geo-coding of addresses upon entry on the mobile device can be done automatically or interactively. Also, in some embodiments, an option in the Address Book application is provided for the user to batch geo-code all of the contact addresses on the device at once, in a single geo-coding request.

In some embodiments, if the address is not an address recognised by the location server as a valid address, the location server will provide suggestions to the mobile device for possible corrections to the address. The mobile device can then present the suggestions on a user interface for selection by a user. The address selected by the user can then be geo-coded. Furthermore, the address selected by the user can be used to replace the invalid address in the address book, thus providing a corrected entry in the address book. This correction of addresses can be done with automatic geo-coding when the address is entered or with batch geo-coding.

In some embodiments, the address book can then be used as a geo-data source which can be registered with the map application. Contacts that have been geo-tagged can be treated as a class of POIs (points of interest) and thus, they can be viewed and navigated on the map. In an exemplary implementation, if the mobile device is enabled with a position broadcast system, such as GPS (Global Positioning System), the mobile device can notify the user if the mobile device is within a specified proximity of one or more of the contacts.

Some business/address card scanners and address export programs can introduce errors in parsing or automatically append default data, such as United States of America at the end of every address regardless of whether the address is an US address or not. A batch geo-coding utility can automatically correct these addresses based on the results returned from the server.

A map application can store geo-coded data as a layer. Each layer represents a class of information or a collection of data items having something in common. A layer might be a type of map data, such as streets or bodies of water. A layer might be a collection of business locations. Thus, the geo-coded contacts in an address book can also be represented as a layer.

In some embodiments, the geo-coded data or a subset of geo-coded data in the address book is stored in memory outside of the address book but accessible to the map application. In other embodiments, the map application is configured to access the address book database directly.

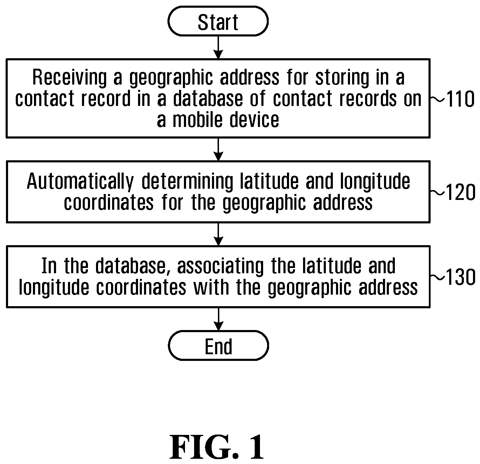

Referring now to Figure 1, a method according to one embodiment will now be described. At step 110 a geographic address is received for storing in a contact record of a database of contact records on the mobile device. The database of contact records, in some embodiments, is part of an address book application executing on a mobile device. At step 120, the latitude and longitude coordinates for the geographic address are automatically determined. In the database, at step 130, the latitude and longitude coordinates are associated with the geographic address.

In some embodiments, the method further comprises storing the latitude and longitude coordinates for the geographic address in the database. In some cases, this is only done if the geographic address is not already stored in the database. For example, in some embodiments, determining the latitude and longitude coordinates comprises first searching existing contact records in the database of contact records for the geographic address and if the latitude and longitude coordinates for the geographic address are in an existing contact record, cross-referencing the contact record to the existing contact record for accessing the latitude and longitude coordinates.

In some embodiments, determining the latitude and longitude coordinates comprises requesting the latitude and longitude coordinates from a location database. In some embodiments, the location database is on a location server and determining the latitude and longitude coordinates comprises requesting the longitude and latitude coordinates from a location server over a wireless network.

The method, in some embodiments, further comprises displaying a location the geographic address on a map using a map application executing on the mobile device. In some embodiments, a user perceptible alert is produced to indicate that the mobile device is within a specified proximity of the geographic address.

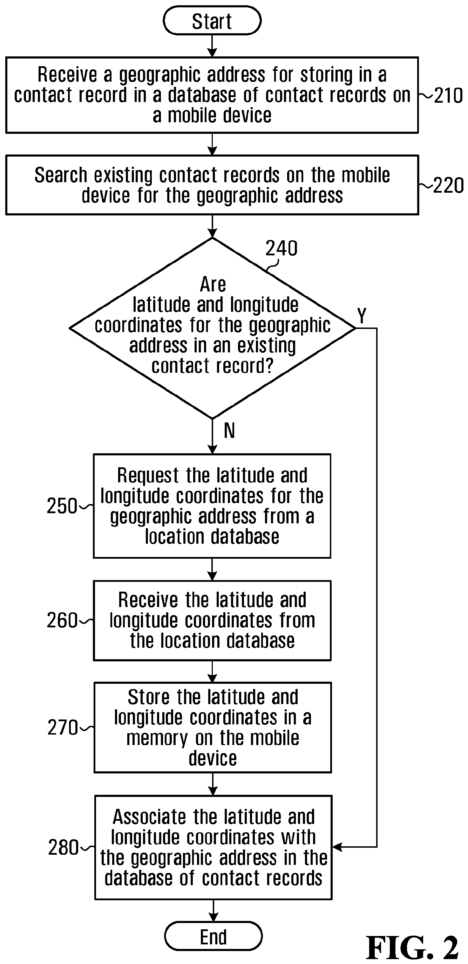

Another exemplary method will now be described with reference to Figure 2. At step 210, a geographic address is received for storing in a contact record in a database of contact records on a mobile device. Then at step 220, existing contact records on the mobile device are searched for the geographic address. Step 240 is a determination of whether or not latitude and longitude coordinates for the geographic address are in an existing contact record. If they are not (No output of decision step 240), the method proceeds with requesting the latitude and longitude coordinates for the geographic address from a location database (Step 250). Next, at Step 260, the latitude and longitude coordinates are received. Then, the latitude and longitude coordinates are stored in a memory on the mobile device (Step 270). Finally, at step 280, the latitude and longitude coordinates are associated with the geographic address in the database of contact records. The Yes output of decision 240, continues at step 280.

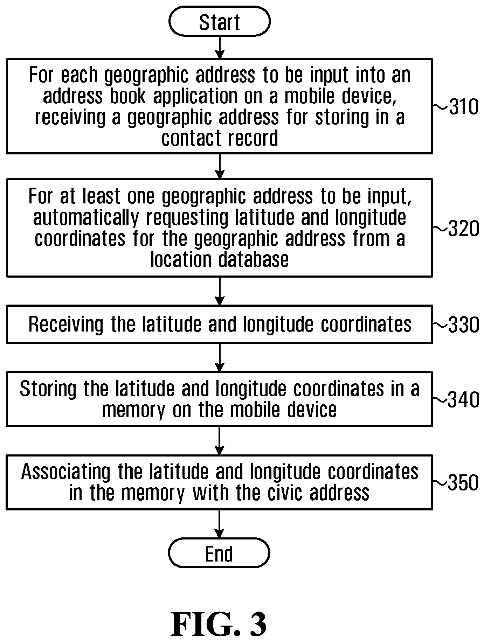

Another embodiment of a method will now be described with reference to Figure 3. The method is performed in a mobile device. At step 310, for each geographic address to be input into an address book application on a mobile device, the geographic address is received for storing in a contact record.

At step 320, for at least one geographic address to be input, latitude and longitude coordinates for the geographic address are automatically requested from a location database. In some embodiments, the address book application has an option that can be selected by a user to automatically request longitude and latitude coordinates for each new geographic address entered. In some embodiments, this step comprises requesting the longitude and latitude coordinates from a location server over a wireless network. In other embodiments, the latitude and longitude coordinates are obtained from a database on the mobile device.

At step 330, the method continues with receiving the latitude and longitude coordinates for the at least one geographic address from the location database. In a non-limiting embodiment, if the geographic address is not found in the location database, the location server provides hints or suggestions to the mobile device for correcting the geographic address. In some embodiments, the mobile device displays these hints or suggestions to the user on a user interface and the user can select or provide a corrected address to input. The step of requesting the latitude and longitude can then be repeated and the receiving the latitude and longitude step is performed.

For example, in some embodiments where the location database is on a location server, the method further comprises receiving an indication from the location server that the geographic address is incorrect. Then, options for correcting the geographic address are presented on a display and an input from a user interface indicating a corrected address is received. Any contact record comprising the geographic address with the corrected address can then be updated. In some embodiments, the location server can include a merit value in its response providing suggested corrections. If the merit value is "absolute certainty", the address can be automatically updated if the address on the device differs from the one returned by the server. As mentioned above, some address card scanners automatically append default data such as "United States of America" to each address. For instance the address on the device could be something like "450 March Rd Ottawa Ontario Canada K2K 3K2 United States of America". The address returned by the server would be "450 March Rd Ottawa Ontario Canada K2K 3K2" with merit value of absolute certainty. In this case, the address on the device would be updated automatically.

Next, at step 340, the method continues with storing the latitude and longitude coordinates for the geographic address in a memory on the mobile device. In some embodiments, the latitude and the longitude are stored in the address book database. In a non-limiting example, the latitude and longitude coordinates are stored in the contact record for the geographic address. In some embodiments, the latitude and longitude coordinates are stored in a cache memory for use by a map application. It is to be understood that these embodiments are not mutually exclusive of each other and the latitude and longitude coordinates can be stored in more than one memory location on the mobile device.

Next, at step 350, the latitude and longitude coordinates are associated in the memory with the geographic address. For example, the coordinates may be cross-referenced to one or more contact records in a database. Alternatively, the coordinates may be cross-referenced to a geographic address that in turn is cross-referenced to one or more contact records.

In some embodiments, the contact record for the at least one contact is marked or tagged to indicate that the latitude and longitude coordinates are available on the mobile device. In some embodiments, a symbol is inserted into the contact record and when the contact record is displayed on a display, a symbol appears to indicate that the latitude and longitude coordinates are available. In other embodiments, when a user selects to view the geographic address for a contact on a map, the mobile device is configured to first check to see if the contact record is marked to indicate that the latitude and longitude coordinates are available on the mobile device. If the coordinates are available on the mobile device, the map application will use the coordinates stored in the memory on the mobile device. There is no requirement to request the coordinates from a location server, unless the contact record is not marked to indicate that the coordinates are available.

In some embodiments the method further comprises, for each contact to be input, searching existing contact records for the geographic address and if the latitude and longitude coordinates for the geographic address are in an existing contact record, cross-referencing the contact record for the contact to the existing record for accessing the latitude and longitude coordinates. Thus, in some implementations, latitude and longitude coordinates for an existing contact record with the same geographic address will be assigned to the new geographic address being entered. In this implementation, no request to the location server for latitude and longitude coordinates is necessary.

In some embodiments, the method further comprises a map application executing on the mobile device accessing the longitude and latitude coordinates stored in the memory. In an exemplary implementation, the method further comprises displaying the location of at least one of the geographic addresses on a map using a map application executed on the mobile device.

In some embodiments, the method further comprises identifying the contact record for the at least one contact as a point of interest (POI). In exemplary implementations, the method further comprises displaying, on a map on the mobile device, the geographic address from at least one contact record that is identified as a POI. Thus, the address book can be used as a source for latitude and longitude coordinates for displaying POIs on a map.

In still another embodiment, a user interface indicates that the mobile device is within a specified proximity of the geographic address of the at least one contact. Thus, the mobile device can compare its present location to at least one of the latitude and longitude coordinates stored in the memory on the mobile device on an ongoing or periodic basis and indicate when the mobile device is near a geographic address. In some embodiments, proximity to POIs is tracked. In other embodiments, contact records can be selected for the purpose of tracking proximity.

In some embodiments the method further comprises creating the contact record.

In some embodiments, the method further comprises requesting latitude and longitude coordinates or geo-coded data for a plurality of geographic addresses in the address book database. In this manner, latitude and longitude coordinates in the address book database that have no latitude and longitude coordinates stored on the mobile device can be batch-geocoded. Then, the results received from the location database can be stored on the mobile device for future use. As well, if the geographic addresses are received in a batch, for example in an address book update or batch transfer from another device, the entire batch can be geo-coded automatically.

The methods described herein are implemented, in some embodiments, by one or more tangible computer readable media having computer readable instructions stored thereon that when executed, implement the respective method. The methods can be implemented using hardware, software, firmware or combinations thereof.

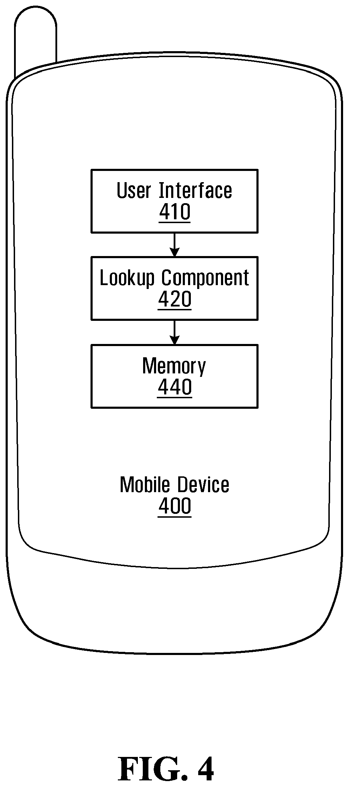

Referring now to Figure 4, an exemplary mobile device 400 will be described. The mobile device comprises a user interface 510, a lookup component 420, and a memory 440.

The user interface 410 is configured to receive a geographic address for storing in a contact record of a database of contact records on the mobile device. Exemplary implementations of the user interface 410 are a keyboard, non-keyboard buttons, a roller-wheel, a trackball, an optical trackball, a touch screen, an image scanning device, a voice activated input, an antenna for receiving data and a port for connecting to external devices.

The memory 240 is for storing the database. In some embodiments, the memory 240 also stores the address book database and the latitude and longitude coordinates are stored in the address book database. In some embodiments, the mobile device 400 further comprises a cache memory, for use by the map application, in which the longitude and latitude coordinates can be temporarily stored.

The look up component 420 configured to automatically determine the latitude and longitude coordinates for the geographic address upon receipt of the geographic address and associate the latitude and longitude coordinates with the geographic address in the database.

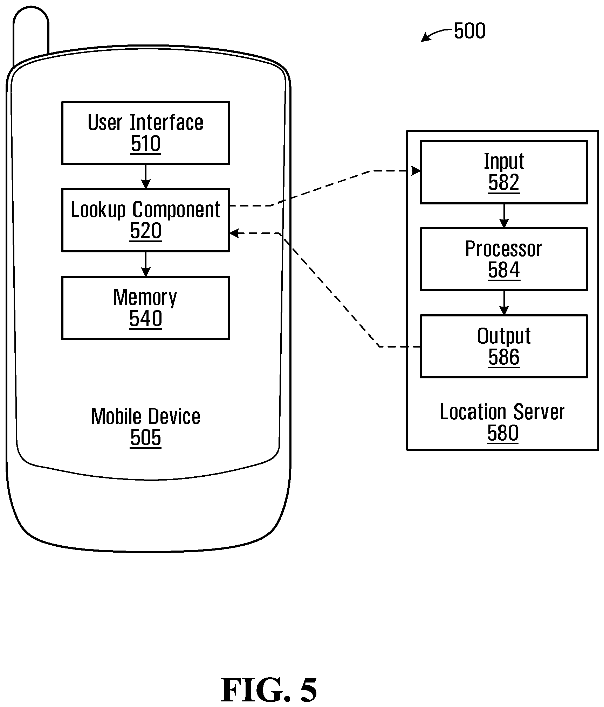

Referring now to Figure 5, an exemplary system 500 according to an aspect will now be described. The system 500 comprises a mobile device 505 and a location server 580.

The mobile device 505 is similar in configuration and function to the mobile device 400 described with reference to Figure 4 and comprises a user interface 510, a lookup component 520, and a memory 540.

The user interface 510 is configured in a similar manner to the interface 410 and is configured to receive a geographic address for storing in a contact record of a database of contact records on the mobile device.

The lookup component 520 is similar to the lookup component 420 is configured to communicate with the location server 580 to request and receive latitude and longitude coordinates for the geographic address from the location server 580 and associate the latitude and longitude coordinates in the memory with the geographic address.

The memory 540 is configured to store the latitude and longitude coordinates for the geographic address.

The location server 580 comprises an input 582, a processor 584 and an output 586. The input 582 is configured to receive the request from the lookup component 520 of the mobile device 505. The processor 584 is configured to determine the latitude and longitude coordinates for the geographic address using a location database. In some embodiments, the location server 580 comprises the location database. The output 586 is configured to output the latitude and longitude coordinates to lookup component 520 of mobile device 505.

In some embodiments of the system 500, the location server 580 and the mobile device 505 communicate over a wireless network.

In some embodiments, the processor 584 of the location server 580 is configured to output suggestions for corrections to the geographic address if the geographic address is not recognized as valid by the processor.

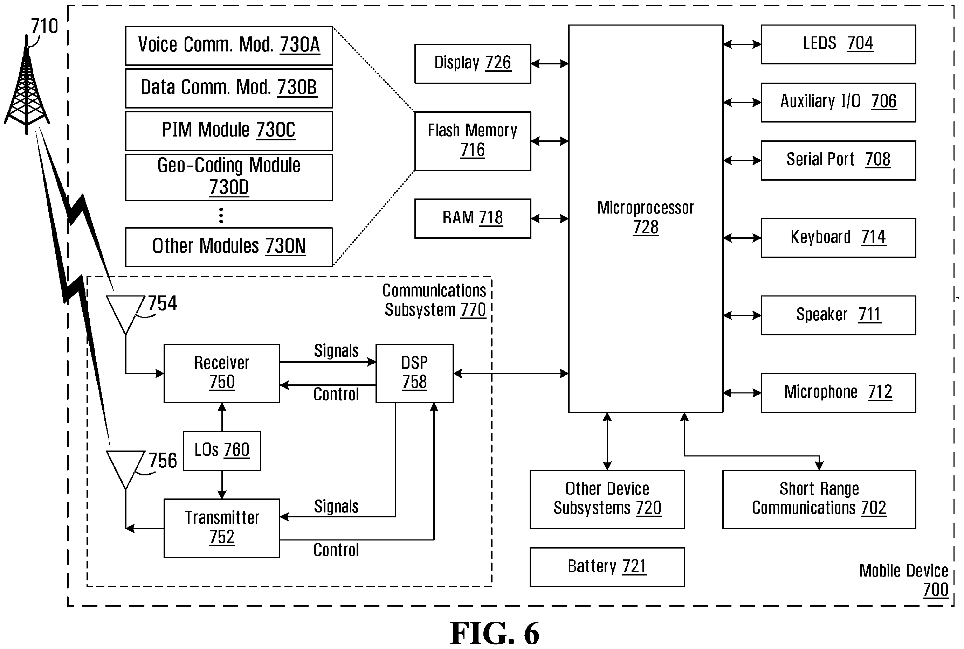

Referring now to Figure 6, shown is a block diagram of another mobile device 700 that may implement any of the methods described herein. It is to be understood that the mobile device 700 is shown with very specific details for example purposes only.

A processing device (a microprocessor 728) is shown schematically as coupled between a keyboard 714 and a display 726. The keyboard 714 and 726 are non-limiting examples of the user interfaces 410 and 510 described with reference to Figures 4 and 5, respectively. The microprocessor 728 controls operation of the display 726, as well as overall operation of the mobile device 700, in response to actuation of keys on the keyboard 714 by a user.

The mobile device 700 has a housing that may be elongated vertically, or may take on other sizes and shapes (including clamshell housing structures). The keyboard 714 may include a mode selection key, or other hardware or software for switching between text entry and telephony entry.

In addition to the microprocessor 728, other parts of the mobile device 700 are shown schematically. These include: a communications subsystem 770; a short-range communications subsystem 702; the keyboard 714 and the display 726, along with other input/output devices including a set of LEDS 704, a set of auxiliary I/O devices 706, a serial port 708, a speaker 711 and a microphone 712; as well as memory devices including a flash memory 716 and a Random Access Memory (RAM) 718; and various other device subsystems 720. The mobile device 700 may have a battery 721 to power the active elements of the mobile device 700. The mobile device 700 is in some embodiments a two-way radio frequency (RF) communication device having voice and data communication capabilities. In addition, the mobile device 700 in some embodiments has the capability to communicate with other computer systems via the Internet.

Operating system software executed by the microprocessor 728 is in some embodiments stored in a persistent store, such as the flash memory 716, but may be stored in other types of memory devices, such as a read only memory (ROM) or similar storage element. In addition, system software, specific device applications, or parts thereof, may be temporarily loaded into a volatile store, such as the RAM 718. Communication signals received by the mobile device 700 may also be stored to the RAM 718.

The microprocessor 728, in addition to its operating system functions, enables execution of software applications on the mobile device 700. A predetermined set of software applications that control basic device operations, such as a voice communications module 730A and a data communications module 730B, may be installed on the mobile device 700 during manufacture. In addition, a personal information manager (PIM) application module 730C may also be installed on the mobile device 700 during manufacture. The PIM application is in some embodiments capable of organizing and managing data items, such as e-mail, calendar events, voice mails, appointments, and task items. The PIM application is also in some embodiments capable of sending and receiving data items via a wireless network 710. In some embodiments, the data items managed by the PIM application are seamlessly integrated, synchronized and updated via the wireless network 710 with the device user's corresponding data items stored or associated with a host computer system.

In addition, a software application to perform a geo-coding function 730D may be installed. The geo-coding function 730D may implement any of the methods described herein for automatically requesting latitude and longitude coordinates for a geographic address input into an address book application on the mobile device 700.

As well, additional software modules, illustrated as another software module 730N, may be installed during manufacture.

Communication functions, including data and voice communications, are performed through the communication subsystem 770, and possibly through the short-range communications subsystem 702. The communication subsystem 770 includes a receiver 750, a transmitter 752 and one or more antennas, illustrated as a receive antenna 754 and a transmit antenna 756. In addition, the communication subsystem 770 also includes a processing module, such as a digital signal processor (DSP) 758, and local oscillators (LOs) 760. The specific design and implementation of the communication subsystem 770 is dependent upon the communication network in which the mobile device 700 is intended to operate. For example, the communication subsystem 770 of the mobile device 700 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 700.

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device 700 may send and receive communication signals over the communication network 710. Signals received from the communication network 710 by the receive antenna 754 are routed to the receiver 750, which provides for signal amplification, frequency down conversion, filtering, channel selection, etc., and may also provide analog to digital conversion. Analog-to-digital conversion of the received signal allows the DSP 758 to perform more complex communication functions, such as demodulation and decoding. In a similar manner, signals to be transmitted to the network 710 are processed (e.g., modulated and encoded) by the DSP 758 and are then provided to the transmitter 752 for digital to analog conversion, frequency up conversion, filtering, amplification and transmission to the communication network 710 (or networks) via the transmit antenna 756.

In addition to processing communication signals, the DSP 758 provides for control of the receiver 750 and the transmitter 752. For example, gains applied to communication signals in the receiver 750 and the transmitter 752 may be adaptively controlled through automatic gain control algorithms implemented in the DSP 758.

In a data communication mode, a received signal, such as a text message or web page download, is processed by the communication subsystem 770 and is input to the microprocessor 728. The received signal is then further processed by the microprocessor 728 for an output to the display 726, or alternatively to some other auxiliary I/O devices 706. A device user may also compose data items, such as e-mail messages, using the keyboard 714 and/or some other auxiliary I/O device 706, such as a touchpad, a rocker switch, a thumb-wheel, or some other type of input device. The composed data items may then be transmitted over the communication network 710 via the communication subsystem 770.

In a voice communication mode, overall operation of the device is substantially similar to the data communication mode, except that received signals are output to a speaker 711, and signals for transmission are generated by a microphone 712. Alternative voice or audio I/O subsystems, such as a voice message recording subsystem, may also be implemented on the device 700. In addition, the display 726 may also be utilized in voice communication mode, for example, to display the identity of a calling party, the duration of a voice call, or other voice call related information.

The short-range communications subsystem 702 enables communication between the mobile device 700 and other proximate systems or devices, which need not necessarily be similar devices. For example, the short-range communications subsystem may include an infrared device and associated circuits and components, or a Bluetooth™ communication module to provide for communication with similarly-enabled systems and devices.

What has been described is merely illustrative of the application of the principles of methods, modules and devices described herein. Other arrangements and methods can be implemented by those skilled in the art without departing from the scope of the invention as defined by the appended claims.

## Claims

1. A method of operating a mobile device (400, 505), the method comprising:
receiving (210, 310), by a user interface (410, 510) of the mobile device (400, 505), a geographic address for storing in a new contact record of a database of contact records on the mobile device (400, 505); the method **characterised by** further comprising the steps of, upon receipt of the geographic address, automatically determining (220-260; 320) latitude and longitude coordinates for the geographic address; and
in the database of contact records, associating (280, 350) the latitude and longitude coordinates with the geographic address;
wherein determining (220-260; 320) the latitude and longitude coordinates is achieved either by requesting (250, 320) the latitude and longitude coordinates from a location server (580) over a wireless network or by searching (220) existing contact records in the database of contact records for the received geographic address, and if (240: Y) the latitude and longitude coordinates for the received geographic address are in an existing contact record, assigning (280) the latitude and longitude coordinates for the existing contact to the new contact record having the same geographic address.

2. The method of claim 1, further comprising storing (270, 340) the latitude and longitude coordinates for the geographic address in the database.

3. The method of claim 1 or 2, wherein determining (220-260; 320) the latitude and longitude coordinates comprises requesting (250; 320) the latitude and longitude coordinates from a location database (250).

4. The method of any one of claims 1 to 3, further comprising displaying a location of the geographic address on a map using a map application executing on the mobile device (400, 505).

5. The method of claim 4, wherein the map application stores geo-coded data as a layer.

6. The method of any one of claims 1 to 5, further comprising utilizing the database of contact records as a geo-data source, wherein contacts that have been geo-tagged are treated as a class of points of interest, and wherein the method further comprises identifying at least one geographic address as a point of interest, POI.

7. The method of any one of claims 1 to 6, further comprising producing a user perceptible alert to indicate that the mobile device (400, 505) is within a specified proximity of the geographic address.

8. The method of any one of claims 1 to 7, further comprising requesting latitude and longitude coordinates for a plurality of geographic addresses in the database of contact records, wherein latitude and longitude coordinates in the database of contact records on the mobile device (400, 505) that have no latitude and longitude coordinates stored, are batch-geocoded.

9. The method of any one of claims 1 to 8, wherein the database of contact records is part of an address book application executing on the mobile device (400, 505).

10. The method of any one of claims 1 to 9, further comprising creating the new contact record in the database of contact records.

11. The method of any one of claims 1 to 10, wherein the latitude and longitude coordinates for the geographic address are stored in a memory (440, 540) of the mobile device (400, 505) outside of an address book application but accessible to a map application.

12. The method of any one of claims 1 to 11, further comprising receiving an indication from a location server that the geographic address is incorrect, presenting a user interface (510) providing user input options for correcting the geographic address, receiving an input from the user interface (510) indicating a corrected address and updating any contact record comprising the geographic address with the corrected address.

13. A mobile device (400, 505) comprising:
a user interface (410, 510) configured to receive (210, 310) a geographic address for storing in a contact record of a database of contact records on the mobile device (400, 505); a memory (440, 540) configured to store the database;
**characterised in that** the mobile device (400, 505) further comprises a look up component (420, 520) configured to automatically determine (220-260; 320) the latitude and longitude coordinates for the geographic address upon receipt of the geographic address and associate (280, 350) the latitude and longitude coordinates with the geographic address in the database of contact records;
wherein the mobile device (400, 505) is configured to determine (220-260; 320) the latitude and longitude coordinates either by requesting (250; 320) the latitude and longitude coordinates from a location server (580) over a wireless network or by searching existing contact records in the database of contact records for the received geographic address, and if (240: Y) the latitude and longitude coordinates for the received geographic address are in an existing contact record, the mobile device is configured to assign (280) the latitude and longitude coordinates for the existing contact to the new contact record having the same geographic address.

14. The mobile device of claim 13, wherein the user interface (410, 510) is a receiver for receiving communications over a wireless network.

15. Computer readable media having computer readable instructions stored thereon that when executed on a processor of a mobile device of any of claims 13 and 14, implement the method of any of claims 1 to 12.

## Patentansprüche

1. Verfahren zum Betreiben einer mobilen Vorrichtung (400, 505), wobei das Verfahren umfasst:
Empfangen (210, 310) einer geographischen Adresse durch eine Benutzerschnittstelle (410, 510) der mobilen Vorrichtung (400, 505) zum Speichern in einem neuen Kontaktdatensatz einer Datenbank von Kontaktdatensätzen auf der mobilen Vorrichtung (400, 505);
wobei das Verfahren **dadurch gekennzeichnet ist, dass** es weiter die folgenden Schritte umfasst: automatisches Bestimmen (220-260; 320) von Breiten- und Längenkoordinaten für die geografische Adresse beim Empfangen der geografischen Adresse; und
Zuordnen (280, 350) der Breiten- und Längenkoordinaten zur geographischen Adresse in der Datenbank der Kontaktdatensätze;
wobei das Bestimmen (220-260; 320) der Breiten- und Längenkoordinaten entweder durch Anfordern (250, 320) der Breiten- und Längenkoordinaten von einem Ortsserver (580) über ein drahtloses Netzwerk oder durch Suchen (220) bestehender Kontaktdatensätze in der Datenbank der Kontakt-Datensätze nach der empfangenen geographischen Adresse erreicht wird und, wenn (240: Ja) die Breiten- und Längenkoordinaten für die empfangene geographische Adresse in einem bestehenden KontaktDatensatz vorliegen, das Zuordnen (280) der Breiten- und Längenkoordinaten für den bestehenden Kontakt zum neuen Kontaktdatensatz mit der gleichen geographischen Adresse erfolgt.

2. Verfahren nach Anspruch 1, weiter umfassend das Speichern (270, 340) der Breiten- und Längenkoordinaten für die geographische Adresse in der Datenbank.

3. Verfahren nach Anspruch 1 oder 2, wobei das Bestimmen (220-260; 320) der Breiten- und Längenkoordinaten das Anfordern (250; 320) der Breiten- und Längenkoordinaten von einer Ortsdatenbank (250) umfasst.

4. Verfahren nach einem der Ansprüche 1 bis 3, weiter umfassend das Anzeigen eines Orts der geographischen Adresse auf einer Karte unter Verwendung einer Kartenanwendung, die auf der mobilen Vorrichtung (400, 505) ausgeführt wird.

5. Verfahren nach Anspruch 4, wobei die Kartenanwendung geokodierte Daten als eine Schicht speichert.

6. Verfahren nach einem der Ansprüche 1 bis 5, weiter umfassend das Verwenden der Datenbank mit Kontaktdatensätzen als eine Geodatenquelle, wobei Kontakte, die mit einem Geo-Tag versehen wurden, als eine Klasse von Punkten von Interesse behandelt werden und wobei das Verfahren weiter das Identifizieren mindestens einer geographischen Adresse als Punkt von Interesse, POI (Point of Interest), umfasst.

7. Verfahren nach einem der Ansprüche 1 bis 6, weiter umfassend das Erzeugen einer für den Benutzer wahrnehmbaren Warnung, um anzuzeigen, dass sich die mobile Vorrichtung (400, 505) in einer bestimmten Nähe zur geografischen Adresse befindet.

8. Verfahren nach einem der Ansprüche 1 bis 7, weiter umfassend das Anfordern von Breiten- und Längenkoordinaten für eine Vielzahl von geographischen Adressen in der Datenbank von Kontaktdatensätzen, wobei Breiten- und Längenkoordinaten in der Datenbank von Kontaktdatensätzen auf der mobilen Vorrichtung (400, 505), die keine gespeicherten Breiten- und Längenkoordinaten haben, losweise geokodiert sind.

9. Verfahren nach einem der Ansprüche 1 bis 8, wobei die Datenbank von Kontaktdatensätzen Teil einer Adressbuchanwendung ist, die auf der mobilen Vorrichtung (400, 505) ausgeführt wird.

10. Verfahren nach einem der Ansprüche 1 bis 9, weiter umfassend das Erstellen des neuen Kontaktdatensatzes in der Datenbank von Kontaktdatensätzen.

11. Verfahren nach einem der Ansprüche 1 bis 10, wobei die Breiten- und Längenkoordinaten für die geographische Adresse in einem Speicher (440, 540) der mobilen Vorrichtung (400, 505) außerhalb einer Adressbuchanwendung gespeichert werden, der aber für eine Kartenanwendung zugänglich ist.

12. Verfahren nach einem der Ansprüche 1 bis 11, weiter umfassend: Empfangen einer Anzeige von einem Ortsserver dahingehend, dass die geografische Adresse nicht korrekt ist, Präsentieren einer Benutzerschnittstelle (510), die Benutzereingabemöglichkeiten zum Korrigieren der geografischen Adresse bereitstellt, Empfangen einer Eingabe von der Benutzerschnittstelle (510), die eine korrigierte Adresse anzeigt, und Aktualisieren eines Kontaktdatensatzes, der die geografische Adresse umfasst, mit der korrigierten Adresse.

13. Mobile Vorrichtung (400, 505), umfassend:
eine Benutzerschnittstelle (410, 510), die so konfiguriert ist, dass sie eine geografische Adresse zum Speichern in einem Kontaktdatensatz einer Datenbank von Kontaktdatensätzen auf der mobilen Vorrichtung (400, 505) empfängt (210, 310); einen Speicher (440, 540), der so konfiguriert ist, dass er die Datenbank speichert;
**dadurch gekennzeichnet, dass** die mobile Vorrichtung (400, 505) weiter eine Nachschlagekomponente (420, 520) umfasst, die so konfiguriert ist, dass sie automatisch die Breiten- und Längenkoordinaten für die geografische Adresse beim Empfangen der geografischen Adresse bestimmt (220-260; 320) und die Breiten- und Längenkoordinaten zu der geografischen Adresse in der Datenbank von Kontaktdatensätzen zuordnet (280, 350);
wobei die mobile Vorrichtung (400, 505) so konfiguriert ist, dass sie die Breiten- und Längenkoordinaten entweder durch Anfordern (250, 320) der Breiten- und Längenkoordinaten von einem Ortsserver (580) über ein drahtloses Netzwerk oder durch Suchen bestehender Kontaktdatensätze in der Datenbank von Kontaktdatensätzen nach der empfangenen geografischen Adresse bestimmt (220-260; 320), und, wenn (240: Ja) die Breiten- und Längenkoordinaten für die empfangene geografische Adresse in einem bestehenden Kontaktdatensatz vorliegen, die mobile Vorrichtung so konfiguriert ist, dass sie die Breiten- und Längenkoordinaten für den bestehenden Kontakt zu dem neuen Kontaktdatensatz mit der gleichen geografischen Adresse zuordnet (280).

14. Mobile Vorrichtung nach Anspruch 13, wobei die Benutzerschnittstelle (410, 510) ein Empfänger zum Empfangen von Kommunikation über ein drahtloses Netzwerk ist.

15. Computerlesbare Medien, auf denen computerlesbare Anweisungen gespeichert sind, die, wenn sie auf einem Prozessor einer mobilen Vorrichtung nach einem der Ansprüche 13 und 14 ausgeführt werden, das Verfahren nach einem der Ansprüche 1 bis 12 durchführen.

## Revendications

1. Procédé de fonctionnement d'un dispositif mobile (400, 505), le procédé comprenant de:
recevoir (210, 310), par une interface d'utilisateur (410, 510) du dispositif mobile (400, 505), une adresse géographique pour mémoriser dans un nouvel enregistrement de contact d'une base de données d'enregistrements de contact sur le dispositif mobile (400, 505);
le procédé étant **caractérisé en ce qu'**il comprend en outre les étapes de consistant à :
déterminer automatiquement (220-260; 320) des coordonnées de latitude et de longitude pour l'adresse géographique; et
dans la base de données des enregistrements de contacts, associer (280, 350) les coordonnées de latitude et de longitude à l'adresse géographique; dans lequel la détermination (220-260; 320) des coordonnées de latitude et la longitude est obtenue en demandant (250, 320) les coordonnées de longitude à un serveur de localisation (580) via un réseau sans fil ou en recherchant (220) des enregistrements de contact existants dans la base de données des enregistrements de contact pour l'adresse géographique reçue, et si (240: Y) les coordonnées de latitude et de longitude pour l'adresse géographique reçue sont dans un enregistrement de contact existant, attribuer (280) les coordonnées de latitude et de longitude pour le contact existant au nouvel enregistrement de contact ayant la même adresse géographique.

2. Procédé selon la revendication 1, comprenant en outre de mémoriser (270, 340) des coordonnées de latitude et de longitude pour l'adresse géographique dans la base de données.

3. Procédé selon la revendication 1 ou 2, dans lequel la détermination (220-260; 320) des coordonnées de latitude et de longitude comprend de demander (250; 320) des coordonnées de latitude et de longitude à une base de données de localisation (250).

4. Procédé selon une quelconque des revendications 1 à 3, comprenant en outre d'afficher un emplacement de l'adresse géographique sur une carte en utilisant une application de carte s'exécutant sur le dispositif mobile (400, 505).

5. Procédé selon la revendication 4, dans lequel l'application cartographique mémorise des données géocodées sous forme de couche.

6. Procédé selon une quelconque des revendications 1 à 5, comprenant en outre d'utiliser la base de données d'enregistrements de contacts en tant que source de géodonnées, dans laquelle les contacts qui ont été géolocalisés sont traités comme une classe de points d'intérêt, et dans lequel le procédé comprend en outre d'identifier au moins une adresse géographique comme point d'intérêt, POI.

7. Procédé selon une quelconque des revendications 1 à 6, comprenant en outre de produire une alerte perceptible par l'utilisateur pour indiquer que le dispositif mobile (400, 505) se trouve à proximité spécifiée de l'adresse géographique.

8. Procédé selon une quelconque des revendications 1 à 7, comprenant en outre de demander des coordonnées de latitude et de longitude pour une pluralité d'adresses géographiques dans la base de données des enregistrements de contacts, dans lequel les coordonnées de latitude et de longitude dans la base de données des enregistrements de contacts sur l'appareil mobile (400, 505) qui n'ont pas de coordonnées de latitude et de longitude mémorisées, sont géocodées par lots.

9. Procédé selon une quelconque des revendications 1 à 8, dans lequel la base de données d'enregistrements de contacts fait partie d'une application de carnet d'adresses s'exécutant sur le dispositif mobile (400, 505) .

10. Procédé selon une quelconque des revendications 1 à 9, comprenant en outre de créer les nouveaux enregistrements de contacts dans la base de données des enregistrements de contacts.

11. Procédé selon une quelconque des revendications 1 à 10, dans lequel les coordonnées de latitude et de longitude pour l'adresse géographique sont mémorisées dans une mémoire (440,540) du dispositif mobile (400, 505) en dehors d'une application de carnet d'adresses mais accessible à une application cartographique.

12. Procédé selon une quelconque des revendications 1 à 11, comprenant en outre de recevoir une indication d'un serveur de localisation que l'adresse géographique est incorrecte, présenter une interface d'utilisateur (510) fournissant des options d'entrée utilisateur pour corriger l'adresse géographique, recevoir une entrée de l'interface utilisateur (510) indiquant une adresse corrigée et mettre à jour n'importe quel enregistrement de contact comprenant l'adresse géographique avec l'adresse corrigée.

13. Dispositif mobile (400, 505) comprenant:
une interface d'utilisateur (410, 510) configurée pour recevoir (210, 310) une adresse pour mémoriser dans un enregistrement de contact d'une base de données des enregistrements de contact sur le dispositif mobile (400, 505);
une mémoire (440, 540) configurée pour mémoriser la base;
**caractérisé en ce que** le dispositif mobile (400, 505) comprend en outre un composant de recherche (420, 520) configuré pour déterminer automatiquement (220-260; 320) les coordonnées de latitude et de longitude de l'adresse géographique à la réception de l'adresse géographique et associer (280, 350) les coordonnées de latitude et de longitude à l'adresse géographique dans la base de données des enregistrements de contacts; dans lequel le dispositif mobile (400, 505) est configuré pour déterminer (220-260; 320) les coordonnées de latitude et de longitude en demandant (250; 320) les coordonnées de latitude et de longitude à un serveur de localisation (580) via un réseau sans fil ou en recherchant des enregistrements dans la base de données des enregistrements de contacts pour l'adresse géographique reçue, et si (240: Y) les coordonnées de latitude et de longitude pour l'adresse géographique reçue se trouvent dans un enregistrement de contact existant, l'appareil mobile est configuré pour attribuer (280) les coordonnées de latitude et de longitude pour le contact existant au nouvel enregistrement de contact ayant la même adresse géographique.

14. Dispositif mobile selon la revendication 13, dans lequel l'interface d'utilisateur (410, 510) est un récepteur pour recevoir des communications via un réseau sans fil.

15. Support lisible par ordinateur sur lequel sont mémorisées des instructions lisibles par ordinateur qui lorsqu'elles sont exécutées sur un processeur d'un appareil mobile selon une quelconque des revendications 13 et 14, met en œuvre le procédé d'une quelconque des revendications 1 à 12.
